# FASCICULE DE BREVET EUROPEEN

(11) **EP 3 781 805 B1**
(45) Date de publication et mention de la délivrance du brevet: **06.04.2022**
(21) Numéro de dépôt: 19724553.3
(22) Date de dépôt: 18.04.2019
(51) Int. Cl.: F02K 9/82, F02K 9/97

(54) **CONTRÔLE DE TRANSITION DE RÉGIME ET DE VECTORISATION DE POUSSÉE DANS UNE TUYÈRE À GALBE MULTIPLE PAR INJECTION SECONDAIRE**
SYSTEM ZUR STEUERUNG DES GESCHWINDIGKEITSWECHSELNS UND DER SCHUBVEKTORISIERUNG IN EINER MEHRFORMDÜSE DURCH SEKUNDÄRE EINSPRITZUNG
SYSTEM FOR CONTROLLING SPEED TRANSITION AND THRUST VECTORISATION IN A MULTIPLE-SHAPED NOZZLE BY SECONDARY INJECTION

(30) Priorité: 18.04.2018 FR 1853407
(43) Date de publication de la demande: 24.02.2021
(73) Titulaire: Centre national de la recherche scientifique, 75016 Paris (FR); Université d'Orléans, 45067 Orléans Cedex 2 (FR); Universite d'Evry Val d'Essonne, 91000 Evry (FR)
(72) Inventeur: LÉGER, Luc, 45750 SAINT-PRYVÉ-SAINT-MESMIN (FR); ZMIJANOVIC, Vladeta, 45000 ORLÉANS (FR); SELLAM, Mohamed, 75017 PARIS (FR); CHPOUN, Amer, 77310 SAINT-FARGEAU-PONTHIERRY (FR)
(74) Mandataire: IPAZ
(86) Numéro de dépôt international: PCT/FR2019/050927
(87) Numéro de publication internationale: WO 2019/202269

(56) Documents cités:
- EP-A2- 2 103 799
- EP-A2- 2 137 395
- EP-A2- 2 466 100
- EP-B1- 2 137 395
- FR-A1- 2 618 488

## Description

### DOMAINE TECHNIQUE

La présente invention relève du domaine des tuyères propulsives de moteurs pour aéronefs ou engins spatiaux propulsés par réaction chimique, et plus spécifiquement du domaine des divergents utilisés dans ces tuyères propulsives.

### ÉTAT DE LA TECHNIQUE

Il est connu de l'homme de l'art, dans le cadre de l'optimisation de la propulsion des aéronefs et des engins spatiaux (en particulier des lanceurs spatiaux) de chercher à optimiser la forme des divergents des tuyères pour obtenir la poussée maximum. Pour optimiser la poussée d'un moteur, l'homme de l'art adapte typiquement la forme du divergent de la tuyère d'éjection en fonction de l'altitude. Avec une forme fixée, cette adaptation n'est effective que dans une plage d'altitude donnée. En dehors de cette plage, les performances du moteur se dégradent et limitent la charge utile de l'aéronef ou du lanceur.

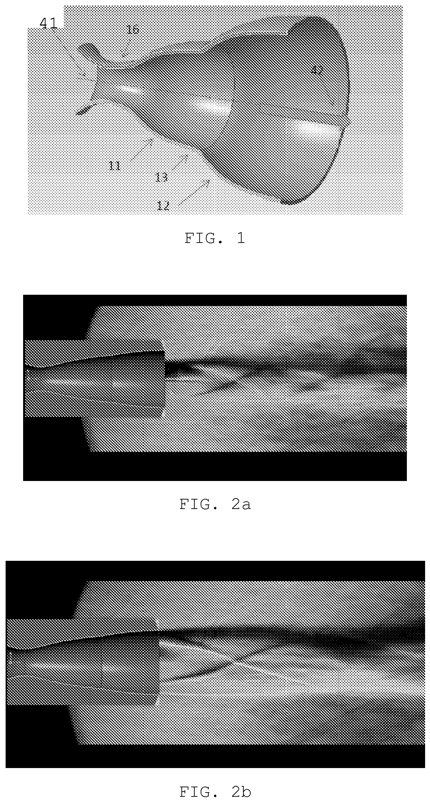

Dans ce contexte, les tuyères à double galbe, par leur simplicité de mise en œuvre, représentent à l'heure actuelle une voie prometteuse, pour l'augmentation des performances des tuyères propulsives [1],[2],[3],[4]. Les divergents des tuyères à double galbe, comme illustré sur la figure 1, sont constituées de deux courbures de profil 11 et 12 unis par une zone de raccordement 13. La première courbure 11 (ou premier galbe) génère un écoulement adapté pour un fonctionnement aux basses altitudes, tandis que la seconde courbure 12 (ou second galbe) génère un écoulement adapté pour un fonctionnement aux hautes altitudes. Les tuyères à double galbe sont donc adaptées à fonctionner dans deux plages d'altitude différentes et permettent donc un meilleur rendement du moteur. Les figures 2a et 2b illustrent la visualisation par strioscopie de l'écoulement à la sortie d'une tuyère à double galbe, respectivement à basse et haute altitude : lorsque la tuyère fonctionne en mode « basse altitude », l'écoulement des gaz propulseur est collé au premier galbe 11 et détaché du second galbe 12 (cf. figure 2a), tandis qu'il est collé au premier 11 et au deuxième galbe 12 lorsque la tuyère fonctionne en mode « haute altitude » (cf. figure 2b).

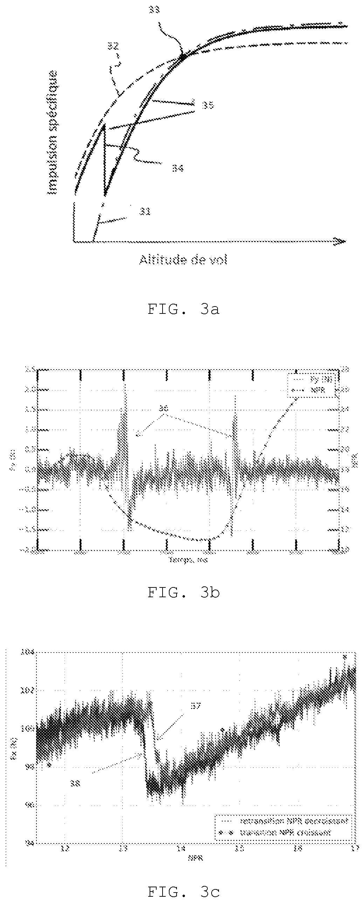

Toutefois, ces tuyères à double galbe présentent un problème majeur qui rend impossible actuellement leur utilisation dans des aéronefs ou des engins spatiaux : à la montée, le passage du régime basse altitude (c'est-à-dire correspondant à un taux de détente NPR (acronyme anglais désignant les termes « *Nozzle Pressure Ratio* » faible), vers le régime haute altitude (C'est-à-dire correspondant à un NPR élevé) s'effectue prématurément, c'est-à-dire à trop basse altitude (NPR trop faible) ; à la descente, le passage du régime de haute altitude au regime basse altitude s'effectue trop tardivement, c'est-à-dire à un NPR trop faible. Cette transition (NPR croissant) ou retransition (NPR décroissant) non optimale induit une perte de poussée repérée par la référence 34 sur la figure 3a illustrant l'évolution de la poussée en fonction de l'altitude, ainsi qu'une instabilité latérale qui induit des efforts latéraux importants référencés 36 sur la figure 3b illustrant l'évolution en fonction du temps de la charge laterale et du NPR.

Ainsi, sur la figure 3a de la présente demande qui illustre l'évolution de la poussée en fonction de l'altitude (et plus spécifiquement l'évolution de l'impulsion spécifique en fonction de l'altitude), la courbe 32 représente la courbe théorique que l'on aurait avec une tuyère à simple galbe dont le profil galbé correspondait à celui du premier galbe 11 de la tuyère à double galbe, tandis que la courbe 31 représente la courbe théorique que l'on aurait avec une tuyère à simple galbe dont le profil galbé correspondait à celui du deuxième galbe 12 de la tuyère à double galbe (cf. Figure 1). Le point idéal de transition est le point 33 (altitude de transition théorique) correspondant au point de croisement des courbes 31 et 32 (de la figure 3a) car il permet de rester sur le meilleur rendement des deux galbes 11 et 12. On observe sur la courbe 35, montrant l'évolution naturelle (c'est-à-dire sans intervention sur l'écoulement) de l'impulsion spécifique en fonction de l'atitude d'une tuyère à double galbe, une chute de poussée (référencée 34 sur la figure 3a) ainsi qu'une forte charge latérale (référencée 36 sur la figure 3b) car la transition et la retransition se font pour une altitude trop faible et de manière instable. De manière plus précise, la figure 3c montre qu'il existe une hystérésis au niveau de l'évolution de la poussée, car le passage naturel entre les deux régimes lorsque l'altitude est croissante (transition 37 illustrée sur la figure 3c) ne se fait pas exactement à la même altitude que lorsque l'altitude est décroissante (retransition 38 illustrée sur la figure 3c également).

Pour résoudre ces défauts et inconvénients, le déposant a mis au point un divergent à rupture de galbe pour tuyère propulsive dans laquelle on réalise une injection fluidique secondaire par l'intermédiaire d'un ou plusieurs orifices ou groupes d'orifices pratiqués dans le second galbe du divergent, en partie avale de la tuyère, qui permet également le contrôle de trajectoire.

Il est connu de l'homme de l'art, notamment par les demandes EP 2103799, FR 2618488 et EP 2137395 de réaliser une injection additionnelle, mais cette injection est réalisée dans le sens de l'écoulement, parallèlement à ce dernier ou de manière tangentielle à la paroi et toujours avant ou dans la zone de raccordement des deux galbes.

Plus particulièrement, la demande de brevet européen EP 2137395 décrit une injection à la rupture de pente du divergent de la tuyère, parallèlement à l'axe de la tuyère dans la direction de l'écoulement principal. L'objectif est double :
- d'une part permettre au jet d'aspirer, par effet Venturi, de l'air de l'extérieur du moteur pour augmenter la masse expulsée, et donc la poussée du moteur lorsque l'écoulement est collé au premier galbe ; et
- d'autre part d'accélérer la couche de mélange (la partie extérieure du jet en contact avec le fluide compris entre le jet et la paroi), pour qu'elle augmente indirectement le gradient de pression négatif et empêcher l'écoulement ainsi de se coller au second galbe prématurément.

Cette technique indirecte peut nécessiter beaucoup d'énergie (action indirecte et dans une zone de cisaillement) et induire un temps de réponse long. De plus, si elle permet de retarder la transition du premier vers le second galbe, elle ne résout ni le problème de l'existence de charges latérales lors de la transition ni le problème de la retransition (charge latérale et retransition tardive).

La demande de brevet français FR 2618488 concerne principalement des divergents de tuyères à deuxième galbe amovible. Dans ce cadre, il n'est pas utile d'empêcher l'écoulement de se coller prématurément au second galbe (comme dans EP 2137395), puisque ce second galbe n'est pas présent (physiquement) tant qu'il n'est pas utile. L'injection tangentielle à la paroi du second galbe située proche de la rupture de pente est ici utilisée pour forcer le recollement au second galbe dans le but d'éviter que cette transition ne se fasse de manière dissymétrique entrainant ainsi des charges latérales (instabilité). Le principe de fonctionnement de la tuyère de FR 2618488 est de forcer le recollement en soufflant la zone de haute pression de manière à favoriser le collement homogène au second galbe. On profite ensuite de cette injection pour refroidir la paroi.

La demande de brevet EP 2103799 décrit un mode de réalisation d'une tuyère propulsive pour laquelle on empêche, dans un premier temps, l'écoulement de se coller au second galbe prématurément en l'accélérant à proximité de la paroi à l'aide d'une injection secondaire tangentielle au premier galbe par une première famille d'orifice située juste en amont du point de rupture de galbe (ce qui va modifier la couche de mélange comme enseigné par EP 2137395), puis dans un second temps, on arrête cette action et on contrôle le recollement sur le second galbe en le favorisant en soufflant tangentiellement au second galbe dans la zone décollée par une seconde famille d'orifices (comme enseigné par FR 2618488).

Dans ces documents de l'art antérieur ^{[1],[2],[3]}, les phénomènes physiques mis en œuvre consistent à accélérer la couche limite ou la couche de mélange, pour empêcher un recollement (c'est à dire pour éviter de se coller trop tôt au second galbe en phase montante et donc la perte de poussée) et pour favoriser un recollement sur le second galbe (c'est à dire pour obtenir une transition homogène ce qui évite les charges latérales). Aucun de ces documents n'enseigne comment réaliser le contrôle de la retransition (du second galbe vers le premier galbe) et aucun de ces documents n'enseigne comment, avec avec le même système d'injection, obtenir une vectorisation de la poussée permettant un control de trajectoire.

### DESCRIPTION DE L'INVENTION

La présente invention a donc mis au point un divergent à double galbe permettant une injection additionnelle de gaz, de sorte que dans une phase de montée, l'écoulement soit maintenu décollé du second galbe, puis dans une phase de descente, qu'un décollement soit provoqué de manière contrôlée et homogène en se servant, dans les deux cas, de la rupture de pente entre les deux profils galbés du divergent qui favorise ce décollement.

À la différence de la tuyère d'EP 2103799, dans la présente invention, l'objectif n'est pas d'accélérer la couche limite mais de renforcer le décollement déjà présent en injectant radialement ou à contre sens dans la zone décollée pour empêcher une transition prématurée sur le second galbe, et de provoquer un décollement du second galbe au point idéal de transition pour contrôler la retransition. Plus spécifiquement, l'idée est de renforcer localement, en aval du point d'inflexion des profils (zone de raccordement des deux galbes), le gradient adverse de pression, pour maintenir l'écoulement entièrement décollé du second galbe ou pour provoquer ce décollement. Cette technique à l'avantage d'agir directement sur le gradient de pression, moteur du décollement, avec très peu d'inertie comparée à la technique d'injection tangentielle. Par ailleurs, à la différence de la tuyère telle qu'enseignée dans EP 2103799, c'est lorsque ce renforcement n'est plus suffisant ou qu'il est arrêté que l'écoulement repasse naturellement à son état collé sur le second galbe dans le cas du control de la transition, et, dans le cas du contrôle de la retransition, il suffit d'arrêter l'injection une fois que l'on est en dessous de l'altitude de retransition naturelle.

La présente invention a donc pour objet un divergent à rupture de galbe pour tuyère propulsive d'un moteur pour aéronef ou engin spatial propulsé par réaction chimique, ladite tuyère étant une tuyère à symétrie de révolution autour d'un axe, ledit moteur comprenant une chambre de réaction produisant des gaz propulseurs destinés à être éjectés hors de la tuyère essentiellement en un flux principal, ledit divergent comprenant à partir du col de la tuyère :
- une première partie comprenant une première paroi présentant une première surface de révolution autour de l'axe de la tuyère, de sorte que ladite première paroi présente dans un plan axial un premier profil galbé, ledit premier profil galbé étant apte à générer un écoulement desdits gaz propulseurs adapté à un fonctionnement à basses altitudes,
- une deuxième partie de longueur totale L, qui est raccordée à ladite première partie au niveau d'une zone de raccordement définissant une rupture de galbe, ladite deuxième partie comprenant une deuxième paroi présentant une seconde surface de révolution autour de l'axe de la tuyère , de sorte que ladite deuxième paroi présente dans un plan axial un deuxième profil galbé, ledit deuxième profil galbé étant apte à générer un écoulement desdits gaz propulseurs adapté à un fonctionnement aux hautes altitudes, et
- un dispositif d'injection contrôlée d'au moins un jet additionnel de gaz dans le flux principal de gaz propulseurs évacués par la tuyère,
ledit divergent étant caractérisé en ce que ledit dispositif d'injection contrôlée est connecté à un ou plusieurs orifices ou groupe d'orifices réalisés de manière axisymétrique dans ladite deuxième paroi dudit divergent, de sorte que l'injection du jet additionnel de gaz est réalisée radialement ou incliné à contresens du flux principal, ledit ou lesdits orifices en étant disposés à une distance d de ladite zone de raccordement à rupture de galbe qui est égale ou inférieure à 95% de la longueur totale L de ladite deuxième partie et supérieure à 1% de la longueur totale L de ladite deuxième partie.

Par jet additionnel de gaz, incliné à contre sens du flux principal, on entend, au sens de la présente invention, une injection de gaz dirigée vers le col de la tuyère de manière à ce que l'angle formé entre la direction du flux principal (ou direction d'injection) et celle du jet additionnel à la tuyère soit compris entre 90° et 180°.

Par basse altitude, on entend, au sens de la présente invention, une altitude située entre le niveau moyen de la mer et une altitude située en dessous de l'altitude de transition naturelle (Atn, référence 34 figure 3a) du régime d'écoulement des gaz propulseurs dans un divergent donné. Dans ce cas, le régime d'écoulement est dit « régime basses altitudes ».

Par altitude de transition naturelle (Atn) du régime d'écoulement des gaz propulseurs dans un divergent donné, on entend, au sens de la présente invention, l'altitude à laquelle on passe naturellement d'un régime d'écoulement pour basses altitudes à un régime d'écoulement pour altitudes élevées, c'est-à-dire sans injection additionnelle de gaz dans le flux principal de gaz évacué par la tuyère.

Par haute altitude, on entend, au sens de la présente invention, une altitude située au-dessus de l'altitude de transition naturelle (Atn) du régime d'écoulement des gaz propulseurs dans un divergent donné. Dans ce cas, le régime d'écoulement est dit « régime hautes altitudes ».

Par groupe d'orifices, on entend, au sens de la présente invention des configurations constituées d'au moins trois groupes d'orifices constitués chacun d'au moins un orifice et régulièrement espacés.

La distance d pourra être adaptée à chaque tuyère de manière à être la plus grande possible pour favoriser l'efficacité du contrôle de trajectoire, tout en permettant, dans le cas du contrôle de la retransition, au décollement de se localiser sur la rupture de galbe.

De manière avantageuse, on pourra également équiper ladite tuyère de plusieurs dispositifs d'injection contrôlée, disposés à différentes distances d successives dans le but d'éviter le recollement au second galbe en aval de la première injection.

Selon un premier mode de réalisation du divergent selon l'invention, le dispositif d'injection contrôlée peut ne comporter qu'un seul orifice consistant en une fente se présentant sous forme d'une couronne s'étendant sur toute la circonférence de la deuxième paroi située à la distance d de la zone de raccordement à rupture de galbe, la largeur de l'orifice permettant d'obtenir un débit allant jusqu'à 20% du débit massique des gaz propulseurs dans la tuyère avec une vitesse d'éjection subsonique ou supérieure.

Selon un deuxième mode de réalisation du divergent selon l'invention, le dispositif d'injection contrôlée peut comporter au moins trois orifices ou groupe d'orifices de forme et dimensions identiques, ces orifices étant régulièrement espacés le long de la circonférence de la deuxième paroi qui est située à la distance d de ladite zone de raccordement à rupture de galbe.

Selon un troisième mode de réalisation du divergent selon l'invention, le divergent peut disposer de plusieurs dispositifs d'injection contrôlée situés à différentes distances d successives permettant d'empêcher le recollement sur le second galbe en aval de la première injection.

De manière avantageuse, le dispositif d'injection du divergent selon l'invention peut en outre comprendre une ou plusieurs chambres de nourrissage reliées chacune avec un orifice du dispositif d'injection et disposées en amont desdits orifices d'injection pour injecter de manière homogène le jet additionnel de gaz dans le divergent.

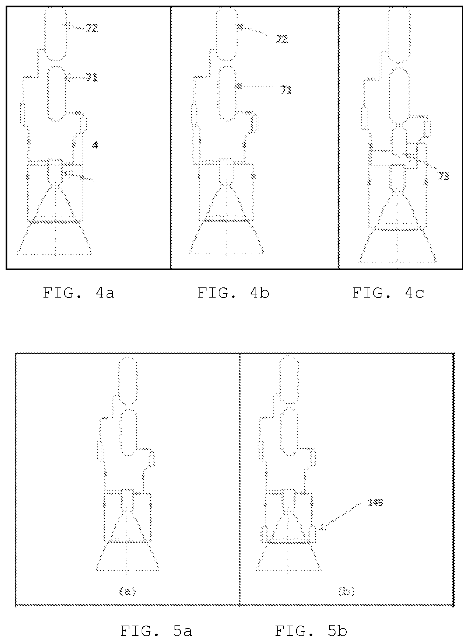

Le jet additionnel de gaz peut provenir de la chambre de réaction ou d'autres réservoirs éventuellement déjà présents, par exemple, dans le cas d'une propulsion par combustion, de réservoirs de comburant ou de carburant, comme schématisé respectivement sur les figures 4a et 4b, ou de réservoirs auxiliaires annexes ou ajoutés spécifiquement pour l'usage de ladite invention comme schématisé sur la figure 4c.

De manière avantageuse, le gaz du jet additionnel peut provenir de la chambre de réaction (comme schématisé sur la figure 5a) et sera muni d'une chambre de nourrissage permettant une injection homogène (comme schématisé sur la figure 5b).

La présente invention a également pour objet une tuyère propulsive d'un moteur pour aéronef ou engin spatial propulsé par réaction chimique, la tuyère comprenant :
- une partie convergente recevant les gaz propulseurs produits dans ladite chambre de réaction,
- un col de tuyère, et
- le divergent selon l'invention raccordée au col de tuyère.

La présente invention a encore pour objet un procédé de contrôle de la transition de régime d'écoulement des gaz propulseurs dans un divergent à galbe multiple de tuyère propulsive d'un moteur pour aéronef ou engin spatial selon que l'altitude de l'aéronef ou de l'engin spatial augmente ou diminue,

ledit procédé comprenant, pour le cas où l'altitude augmente, les étapes suivantes :
- on équipe ledit moteur d'une tuyère propulsive selon l'invention ;
- juste avant d'atteindre l'altitude de transition naturelle, on injecte radialement dans la tuyère, du gaz par l'intermédiaire du dispositif d'injection contrôlée ; et
- on maintient l'injection jusqu'à ce que l'altitude de l'aéronef ou de l'engin spatial atteigne une altitude de transition dite optimale ;
ledit procédé comprenant, pour le cas où l'altitude diminue, les étapes suivantes :
- on équipe ledit moteur pour engin spatial d'une tuyère propulsive selon l'invention ;
- à l'altitude optimale de transition, on injecte, dans la tuyère, du gaz par l'intermédiaire dudit dispositif d'injection contrôlée de manière à forcer le décollement du flux principal de la deuxième paroi ; et
- on maintient l'injection jusqu'à ce que l'altitude de l'aéronef ou de l'engin spatial passe en dessous de ladite altitude de transition naturelle, ce qui garantit l'absence d'instabilité après l'arrêt de l'injection.

Par altitude de transition optimale, on entend au sens de la présente invention, l'altitude de changement de régime permettant d'éviter la perte de poussée (telle qu'illustrée sur les figures 3a et 3c).

La présente invention a encore pour objet un procédé de vectorisation de la poussée dans un divergent à galbe multiple d'une tuyère propulsive d'un moteur pour aéronef ou engin spatial, le procédé comprenant les étapes suivantes :
- on équipe ledit moteur d'une tuyère propulsive selon l'invention munie d'un divergent selon le deuxième mode de réalisation selon l'invention (dispositif d'injection de gaz additionnel muni de plusieurs orifices d'injection) ;
- lorsqu'une correction de trajectoire est nécessaire, on injecte radialement et de manière dissymétrique du gaz via les orifices, en faisant varier les débits d'injection d'un orifice à l'autre, de manière à rendre dissymétrique l'écoulement du flux principal de gaz propulseur ainsi que la pression qu'il impose sur la paroi de la tuyère et ainsi vectoriser la poussée.

Ainsi, dans le cas d'un écoulement collé au premier galbe (régime « basses altitudes »), on impacte le jet dans sa partie libre (après la rupture de pente) mais à l'intérieur de la tuyère : on obtient une dissymétrie du jet à l'aide d'un obstacle fluidique. Dans le régime « hautes altitudes », on provoque un décollement partiel de l'écoulement (sur une partie de la surface interne de la tuyère) pour obtenir une dissymétrie dans l'écoulement et dans la répartition de pression sur la paroi.

La tuyère selon l'invention peut notamment être utilisée, lors des phases de décollage et d'atterrissage, pour empêcher des instabilités de combustion ou induites par la proximité du sol de provoquer une transition de régime temporaire. L'injection du jet additionnel de gaz permet alors de garantir que l'écoulement n'aille pas se coller sur le second galbe et permet alors d'être sûr que ces instabilités ne vont pas provoquer un changement de régime temporaire.

La présente invention a encore pour objet un procédé de de contrôle de recollement de jet sur le second galbe d'un divergent à galbe multiple d'une tuyère propulsive d'un moteur d'engin spatial lorsque l'engin spatial est en phase de décollage ou d'atterrissage,
ledit procédé comprenant les étapes suivantes :
- on équipe ledit moteur pour engin spatial d'une tuyère propulsive selon l'invention ;
- À l'allumage du moteur on injecte radialement, dans la tuyère, du gaz par l'intermédiaire du dispositif d'injection contrôlée jusqu'à atteindre une altitude suffisante garantissant l'absence d'instabilité ;
- À très basse altitude, lors de la phase d'atterrissage, on injecte radialement, dans la tuyère, du gaz par l'intermédiaire dudit dispositif d'injection contrôlée jusqu'à l'extinction du moteur.

D'autres avantages et particularités de la présente invention résulteront de la description qui va suivre, donnée à titre d'exemple non limitatif et faite en référence aux figures annexées et aux exemples correspondants :
- la figure 1 représente une vue schématique en perspective d'une tuyère propulsive à double galbe ;
- la figure 2 montre la visualisation obtenue par strioscopie d'un écoulement à la sortie d'un divergent à double galbe d'une tuyère propulsive connue de l'art antérieur, pour un fonctionnement à basses altitude (première partie 2a montrant que l'écoulement reste collé au premier galbe et détaché du second galbe) et un fonctionnement à haute altitude (deuxième partie 2b montrant que l'écoulement reste collé aux premier et deuxième galbes) ;
- les figures 3a et 3c sont des courbes montrant l'évolution de la poussée en fonction de l'altitude (impulsion spécifique en fonction du NPR, tandis que la figure 3b représente l'évolution de la charge latérale à la retransition puis à la transition ;
- la figure 4 représente schématiquement un système de propulsion par combustion équipé d'une tuyère à double galbe équipé d'un système d'injection secondaire selon le premier mode de réalisation du divergent selon l'invention (un seul orifice d'injection), le gaz de l'injection secondaire provenant (figure 4a) soit du réservoir de carburant, soit du réservoir de comburant (figure 4b), soit d'un réservoir auxiliaire (figure 4c) ;
- la figure 5 représente schématiquement un système de propulsion par combustion équipé d'une tuyère à double galbe équipé d'un système d'injection secondaire selon le premier mode de réalisation du divergent selon l'invention (un seul orifice d'injection), le gaz de l'injection secondaire provenant de la chambre de combustion sans chambre de nourrissage (a) et avec chambre de nourrissage (b) .
- la figure 6 représente une vue schématique d'un exemple de tuyère équipée d'un divergent à rupture de galbe et d'un système d'injection secondaire, selon le premier mode de réalisation du divergent selon l'invention (un seul orifice d'injection).
- la figure 7 est une photographie de la tuyère illustrée sur la figure 6 avec une chambre haute pression 70 alimentant la tuyère en gaz propulseur, la tuyère et la chambre haute pression étant montées sur un banc d'essai expérimental ;
- les figures 8a et 8b sont des représentations schématiques d'une tuyère équipée d'un divergent à double galbe et d'un système d'injection, selon le deuxième mode de réalisation du divergent selon l'invention (pluralités d'orifices d'injection) : l'injection secondaire est réalisée par quatre orifices (visibles sur la figure 8a) possédant chacun leur chambre de nourrissage (visibles sur la figure 8b) ;
- la figure 9 montre un schéma illustrant l'utilisation de différents types d'orifices possible : l'injection peut être réalisée par plusieurs orifices (figure 9a) ou groupes d'orifices (figure 9b, 9c) réalisés de manière axisymétrique dans le deuxième galbe radialement ou légèrement incliné à contre sens ;
- la figure 10 est un schéma (avec dimensions) définissant le profil d'un exemple de divergent à double galbe selon l'invention utilisé pour les simulations et les expériences ;
- la figure 11 montre les champs de Mach obtenus par simulation numérique à l'intérieur d'une tuyère selon l'invention pour différents NPR dans le cas d'une injection secondaire inactive (a) et active (b) dont le débit correspond à 2% de débit massique principal ;
- la figure 12 montre l'évolution de la poussée Fx en fonction du NPR, pour un NPR croissant, pour différentes pressions d'injection secondaire ;
- la figure 13 montre l'évolution de la poussée Fx en fonction du NPR pour un NPR décroissant, pour différentes pressions d'injection secondaire ;
- la figure 14 montre l'évolution de la pression d'injection secondaire Pi (mesurée dans la chambre de nourrissage en kPa), de la poussée Fx (en N), de la charge latérale Fy (en N) ainsi que du NPR au cours du temps ;
- la figure 15 montre la visualisation obtenue par strioscopie (a) et par simulation numérique (b), d'un écoulement à la sortie d'un divergent à simple galbe d'une tuyère propulsive connue de l'art antérieur avec une injection secondaire radiale effectuée via un orifice unique circulaire.

Les éléments identiques représentés sur les figures 1 à 15 sont identifiés par des références numériques identiques.

Les figures 1 à 5 sont commentées dans la description de l'invention correspondant à l'art antérieur

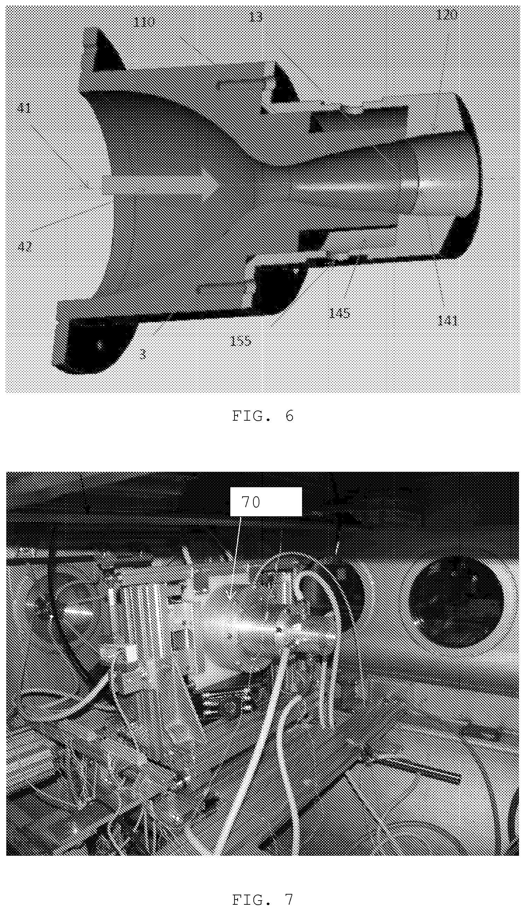

Les figures 6 à 9 sont décrites plus en détail au niveau de la partie de la description qui suit, relative à la description détaillée de divergents à double galbe selon l'invention (trois modes de réalisation) et d'une tuyère selon l'invention.

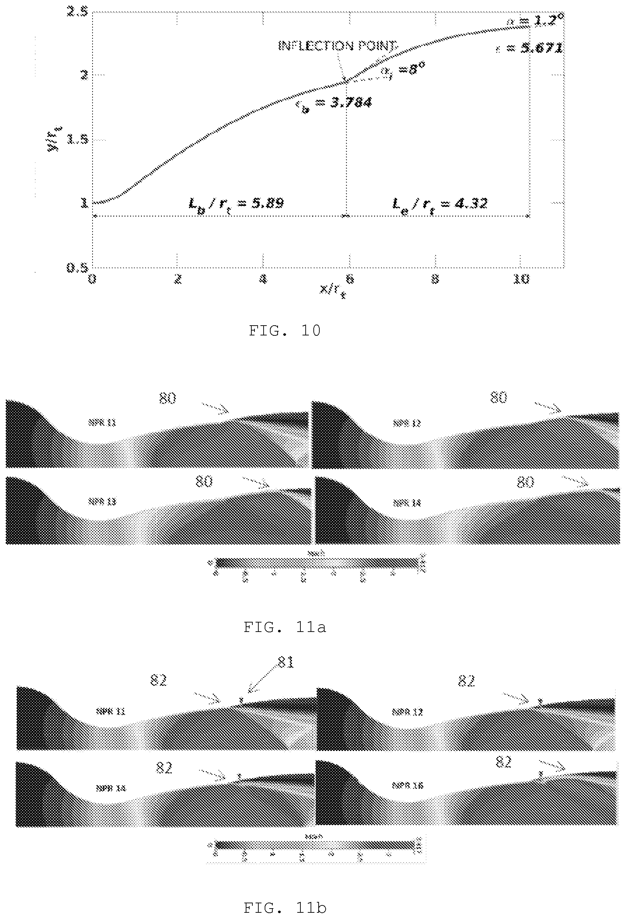

Les figures 10 à 15 sont décrites plus en détail au niveau des exemples qui suivent, qui illustrent l'invention sans en limiter la portée.

### DESCRIPTION D'UN MODE DE RÉALISATION

La figure 6 représente une vue schématique d'un exemple de tuyère 4 équipée d'un divergent 1 à rupture de galbe selon le premier mode de réalisation selon l'invention (un seul orifice d'injection), faisant partie d'un système propulsif (montré sur son banc expérimental en figure 7) pour aéronef ou engin spatial propulsé par réaction chimique comprenant une chambre à haute pression 70 (en amont) accouplée à une tuyère 4 d'éjection. La tuyère 4 est une tuyère à symétrie de révolution autour d'un axe 41 (figure 6). Le gaz à haute pression est détendu et éjecté vers l'extérieur via la tuyère 4 essentiellement en un flux principal 42 (figure 6) Le divergent 1 comprend à partir du col de la tuyère 3 :
- une première partie 11 comprenant une première paroi 110 présentant une première surface de révolution autour de l'axe de la tuyère 41, de sorte que la première paroi 110 présente dans un plan axial un premier profil galbé (ou premier galbe),
- une deuxième partie 12 de longueur totale L, est raccordée à ladite première partie 11 au niveau d'une zone de raccordement 13 définissant une rupture de galbe, la deuxième partie 12 comprenant une deuxième paroi 120 présentant une seconde surface de révolution autour de l'axe de la tuyère 41, de sorte que la deuxième paroi 120 présente dans un plan axial un deuxième profil galbé (ou deuxième galbe), et en outre
- un dispositif 14 d'injection contrôlée d'au moins un jet additionnel de gaz dans le flux principal de gaz 42 évacué par la tuyère 4.

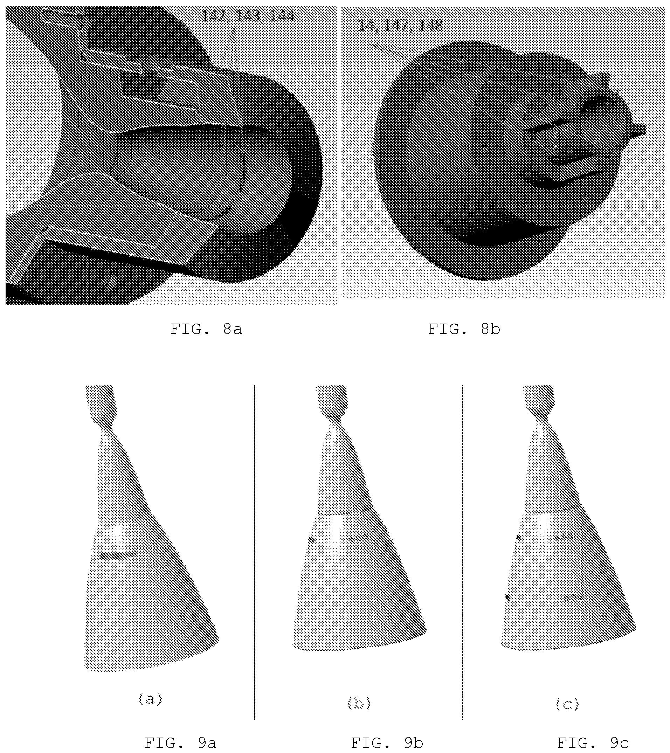

L'injection du fluide pourra être réalisée par un (141, figure 6) ou (142, 143, 144 : figure 8a) possédant chacun leur chambre de nourrissage (146, 147, 148 à 89 : figure 8b), ou encore par plusieurs groupe d'orifices (figure 9b, 9c) réalisés de manière axisymétrique dans le deuxième galbe 120, de sorte que l'injection additionnelle du jet additionnel de gaz est réalisée radialement ou légèrement incliné à contre sens. Les orifices sont disposés, pour les deux premier modes de réalisation (illustrés sur la figure 6 d'une part, et les figures 8, 9a et 9b d'autre part) à une distance d de la zone de raccordement 13 à rupture de galbe, de manière à ce que l'injection permettre, dans le cas du régime de fonctionnement à haute altitude (collé au second galbe) au choc de décollement de stabiliser sur la zone de raccordement 13.

Dans le troisième mode de la présente injection (pluralité de groupes d'orifices : figure 9c), plusieurs systèmes d'injection pourront être utilisés de manière à empêcher le recollement sur le second galbe 120 en aval de la première injection.

### EXEMPLES

On utilise une tuyère selon l'invention (telle que représentée sur les figures 6 et 7), qui est réalisée en fonction des capacités expérimentales du banc de test. Les conditions initiales (en amont du col de la tuyère) sont de 3.5 bar et 290 K, le col de la tuyère présente un rayon rₜ de 8,5 mm, ce qui donne un débit théorique de 0.2285 kg/s. Le profil de la tuyère est obtenu à l'aide de la méthode des caractéristiques inverse initiée par la méthode Sauer^{[5]} appliquée à l'écoulement transsonique. La tuyère idéale est tronquée (de longueur L_{b}) pour obtenir un angle de sortie de 4.4°. L'extension (de longueur Lₑ) est aussi déterminée par la méthode des caractéristiques de manière à avoir une pression constante à la paroi. L'angle à la zone de raccordement 13 est de 8°. Ces données sont résumées sur la figure 10.

La figure 11 illustre le principe de fonctionnement du système d'injection selon la présente invention dans le cas d'une augmentation de l'altitude (NPR croissant), sans injection secondaire (figure 11a) et avec injection secondaire active (figure 11b).

Ce calcul est réalisé à l'aide du code de calcul commercial FASTRAN écrit spécialement pour les applications de mécanique des fluides compressible à hauts nombres Mach. Il résout les équations de Navier-Stokes moyennées (RANS) par la méthode des volumes finis, les termes non visqueux étant calculés à l'aide du schéma de Van Leer^{[6]} avec limiteur de flux d'Osher de troisième ordre. Le modèle de turbulence utilisé est le K-Omega SST-Menter. Un maillage multi-domaines est utilisé. Les conditions initiales sont : température 290 K, 3.5 bar. L'injection est située à x/rₜ =6,483, x étant la distance entre l'injection et le col de la tuyère et rₜ étant le rayon du col de la tuyère. L'orifice d'injection a une largeur de 0.5 mm, la pression d'injection est de 0.4 bar, et le débit injecté est d'environ 2% du débit principal de la tuyère (débit du gaz propulseur).

Dans la figure 11a représentant le champ de nombres de Mach (vitesse/vitesse du son) pour différents NPR (altitude), on peut voir que, sans injection secondaire, le point de décollement noté 80 (figure 11a) se déplace vers l'aval au fur et à mesure que le NPR augmente. Dès NPR=11, le choc de décollement est attaché au second galbe, alors qu'à NPR=14 il a pratiquement atteint la lèvre de sortie du second galbe. La figure 11b montre le champ de nombres de Mach pour différents NPR dans le cas d'une injection secondaire active 81 (2% du débit massique primaire). Elle montre que l'on arrive à repousser l'altitude de recollement sur le second galbe. En effet, le point de décollement 82 est dans ce cas maintenu sur la zone de raccordement 13 à rupture de galbe jusqu'à un NPR de 14, alors que sans injection, ce point de décollement 80 est pratiquement situé à la sortie du second galbe 120. Pour un NPR de 16, l'injection secondaire n'est plus assez importante (en termes de débit) pour continuer à maintenir le décollement, l'écoulement se recolle donc derrière l'injection 81.

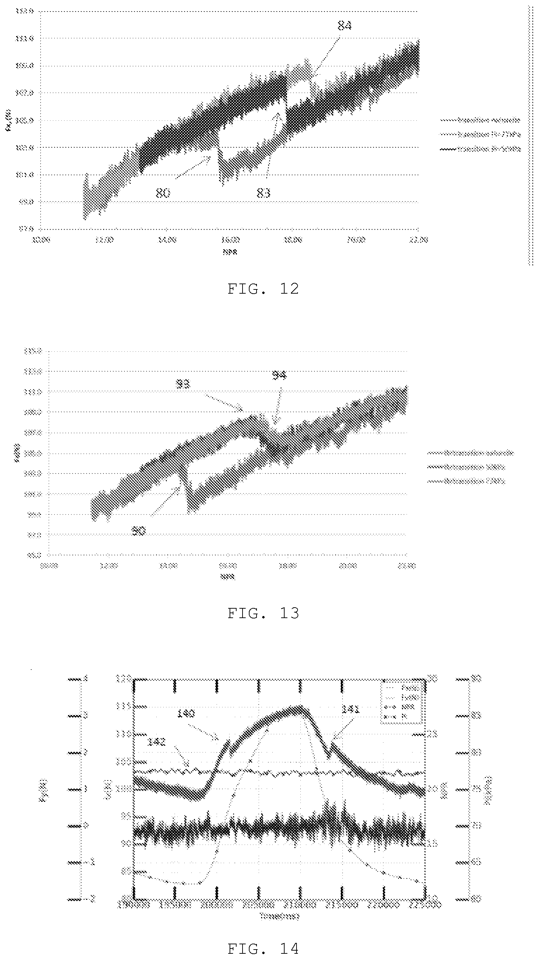

Ce calcul prédictif est vérifié expérimentalement à l'aide du montage présenté sur la figure 7 comme illustré sur les figures 12 et 13, qui représentent respectivement l'évolution de la poussée Fx en fonction du NPR dans le cas d'un NPR croissant (figure 12) et décroissant (figure 13) pour différentes pressions d'injection secondaire (mesurées dans la chambre de nourrissage 145):
On observe sur la figure 12 qu'une injection secondaire retarde la transition à un NPR supérieur (83 avec une injection secondaire à 50 kPa, et 84 avec une injection secondaire à 77 kPa, en comparaison avec le NPR de transition naturelle 80.

On observe sur la figure 13 qu'une injection secondaire déclenche la retransition à un NPR plus élevé (93 avec une injection secondaire à 50 kPa, et 94 avec une injection secondaire à 77 kPa), en comparaison avec la retransition naturelle 90, ce qui est l'effet bénéfique recherché. L'injection secondaire induit non seulement une transition et une retransition plus favorables, mais aussi une diminution, voire une suppression des charges latérales néfastes.

La figure 14 montre l'évolution de la pression d'injection secondaire Pi (mesurée dans la chambre de nourrissage), de la poussée Fx, de la charge latérale Fy ainsi que du NPR, au cours du temps durant une expérience. On observe une chute 140 de poussée à la montée de NPR, et une augmentation 141 de la poussée à la décroissance de NPR, ce qui indique que la pression d'injection n'est pas assez élevée (courbe 142) pour atteindre le fonctionnement optimal décrit précédemment. Malgré cela, on n'observe plus de pic de charge latérale comme dans le cas sans injection (pics référencés 36 de la figure 3b), ce qui est l'effet bénéfique recherché.

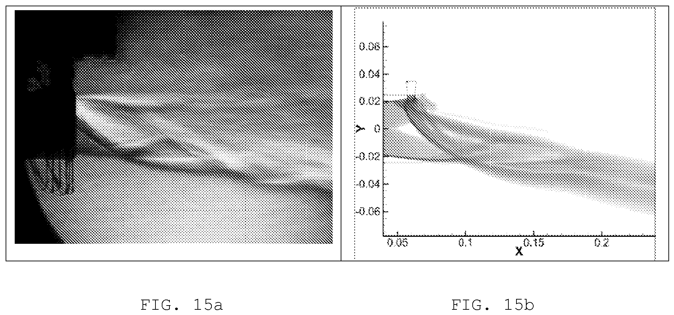

La figure 15 montre la visualisation obtenue par strioscopie (partie a de la figure) et par simulation numérique (partie b de la figure), d'un écoulement à la sortie d'un divergent à simple galbe d'une tuyère propulsive connue de l'art antérieur avec une injection secondaire radiale effectuée via un orifice unique circulaire de diamètre 5.8 mm. L'injection est située à 88% de la longueur totale du divergent, le débit massique de l'injection secondaire est de 8% du débit principal de gaz propulseur. On observe sur la figure 15 que l'injection secondaire provoque un décollement partiel de l'écoulement dans la tuyère. Cette injection provoque ainsi une dissymétrie dans l'écoulement et dans la répartition de pression sur la paroi. La force poussée obtenue n'est donc plus alignée avec l'axe de la tuyère. De ce fait, il devient possible de contrôler la trajectoire d'un aéronef ou d'un engin spatial sans autres systèmes spécifiques de contrôle de trajectoire.

### LISTE DES RÉFÉRENCES

[1] Demande de brevet européen EP 2103799 de MITSUBISHI HEAVY INDUSTRIES.
[2] Demande de brevet français FR2618488 de la Société Européenne de Propulsion (SEP).
[3] Demande de brevet européen EP2137395 de MOSCOW AVIATION INSTITUTE.
[4] Brevet américain US 3,394,549 de l'AMERICAN ROCKWELL CORPORATION.
[5] R. Sauer, "Dreidimensionale Probleme der Characterisikentheorie partieller Differential-gleichungen", Zeitschrift fur angewandte Mathematik und Mechanik, Vol 30, pp 347-356, November-December 1950.
[6] Van Leer, B. (1979), "Towards the Ultimate Conservative Difference Scheme, V. A Second Order Sequel to Godunov's Method", J. Com. Phys., 32, 101-136.

## Revendications

1. Divergent à galbe multiple pour tuyère propulsive (4) d'un moteur pour aéronef ou engin spatial propulsé par réaction chimique, ladite tuyère étant une tuyère à symétrie de révolution autour d'un axe (41), ledit moteur comprenant une chambre de réaction produisant des gaz propulseurs destinés à être éjectés hors de la tuyère (4) essentiellement en un flux principal (42), ledit divergent comprenant à partir du col de la tuyère (3) :
- une première partie (11) comprenant une première paroi (110) présentant une première surface de révolution autour de l'axe de la tuyère (41) , de sorte que ladite première paroi (110) présente dans un plan axial un premier profil galbé, ledit premier profil galbé étant apte à générer un écoulement desdits gaz propulseurs adapté à un fonctionnement à basses altitudes,
- une deuxième partie (12) de longueur totale L, qui est raccordée à ladite première partie (11) au niveau d'une zone de raccordement (13) définissant une rupture de galbe, ladite deuxième partie (12) comprenant une deuxième paroi (120) présentant une seconde surface de révolution autour de l'axe de la tuyère (41), de sorte que ladite deuxième paroi (120) présente dans un plan axial un deuxième profil galbé, ledit deuxième profil galbé étant apte à générer un écoulement desdits gaz propulseurs adapté à un fonctionnement aux hautes altitudes, et
- un dispositif d'injection contrôlée (14) d'au moins un jet additionnel de gaz (15) dans le flux principal (42) de gaz propulseurs évacués par la tuyère (4),
ledit divergent étant **caractérisé en ce que** ledit dispositif d'injection contrôlée (14) est connecté à un (141) ou plusieurs orifices ou groupe d'orifices (141, 142, 143, 144) réalisés de manière axisymétrique dans ladite deuxième paroi (120) dudit divergent, de sorte que l'injection du jet additionnel de gaz (15) est réalisée radialement ou incliné à contresens du flux principal, ledit ou lesdits orifices (141, 142, 143, 144) en étant disposés à une distance d de ladite zone de raccordement à rupture de galbe qui est égale ou inférieure à 95 % de la longueur totale L de ladite deuxième partie (12) et supérieure à 1% de la longueur totale L de ladite deuxième partie (12).

2. Divergent selon la revendication 1, dans lequel ledit dispositif d'injection contrôlée (14) comporte un seul orifice (141) consistant en une fente se présentant sous forme d'une couronne s'étendant sur toute la circonférence de la deuxième paroi (120) située à la distance d de ladite zone de raccordement à rupture de galbe, la largeur de l'orifice (141) permettant d'obtenir un débit allant jusqu'à 20% du débit massique des gaz propulseurs dans la tuyère avec une vitesse d'éjection subsonique ou supérieure.

3. Divergent selon les revendications 1 ou 2, dans lequel ledit dispositif d'injection contrôlée (14) comporte au moins trois orifices (142, 143, 144) de forme et dimensions identiques, lesdits orifices (142, 143, 144) étant régulièrement espacés le long de la circonférence de la deuxième paroi (12) qui est située à la distance d de ladite zone de raccordement à rupture de galbe.

4. Divergent selon l'une quelconque des revendications 1 à 3, selon lequel ledit dispositif d'injection (14) comprend en outre une ou plusieurs chambres de nourrissage (145, 146, 147, 148) communiquant chacune avec un orifice (141, 142, 143, 144) dudit dispositif d'injection (14) et disposées en amont dudit dispositif d'injection (14) pour injecter de manière homogène le jet additionnel de gaz (15) dans ledit divergent.

5. Divergent selon l'une quelconque des revendications 1 à 4, comprenant plusieurs dispositifs d'injection contrôlée (14) situés à différentes distances d successives permettant d'empêcher le recollement sur le second galbe en aval de la première injection.

6. Divergent selon l'une quelconque des revendications 1 à 5, selon lequel le jet additionnel de gaz (15) injecté par ledit ou lesdits dispositifs d'injection (14) proviennent de ladite chambre de réaction (5) du moteur, ou de réservoirs de comburant (71) ou de carburant (72), ou de réservoirs auxiliaires annexes (73).

7. Tuyère propulsive (4) d'un moteur pour aéronef ou engin spatial propulsé par réaction chimique, ladite tuyère (4) comprenant :
- une partie convergente (2) recevant les gaz produits dans ladite chambre de réaction (5),
- un col de tuyère (3), et
- un divergent raccordé au col de tuyère (3),
ladite tuyère (4) étant **caractérisée en ce que** le divergent (1) est tel que défini selon l'une quelconque des revendications 1 à 6.

8. Procédé de contrôle de la transition de régime d'écoulement des gaz propulseurs dans un divergent à galbe multiple d'une tuyère propulsive (4) d'un moteur pour aéronef ou engin spatial selon que l'altitude de l'aéronef ou de l'engin spatial augmente ou diminue,
ledit procédé comprenant, pour le cas où l'altitude augmente, les étapes suivantes :
• on équipe ledit moteur d'une tuyère propulsive (4) telle que définie selon la revendication 7 ;
• juste avant d'atteindre l'altitude de transition naturelle, on injecte radialement dans ladite tuyère (4), du gaz (15) par l'intermédiaire dudit dispositif d'injection contrôlée (14) ; et
• on maintient l'injection jusqu'à ce que l'altitude de l'aéronef ou de l'engin spatial atteigne une ladite altitude de transition dite optimale.
ledit procédé comprenant, pour le cas où l'altitude diminue, les étapes suivantes :
• on équipe ledit moteur pour engin spatial d'une tuyère propulsive (4) telle que définie selon la revendication 7 ;
• à l'altitude optimale de transition, on injecte, dans ladite tuyère (4), du gaz (15) par l'intermédiaire dudit dispositif d'injection contrôlée (14) de manière à forcer le décollement du flux principal (42) de la deuxième paroi (120) ; et
• on maintient l'injection jusqu'à ce que l'altitude de l'aéronef ou de l'engin spatial passe en dessous de ladite altitude de transition naturelle.

9. Procédé de vectorisation de la poussée dans un divergent à galbe multiple d'une tuyère propulsive (4) d'un moteur pour aéronef ou engin spatial, ledit procédé comprenant les étapes suivantes :
• on équipe ledit moteur d'une tuyère propulsive (4) telle que définie selon les revendications 3 et 7 prises conjointement ;
• lorsqu'une correction de la trajectoire dudit aéronef ou engin spatial est nécessaire, on injecte radialement et de manière dissymétrique du gaz via lesdits orifices (142, 143, 144) en faisant varier les débits d'injection d'un orifice à l'autre, de manière à rendre dissymétrique l'écoulement du flux principal de gaz propulseur et la pression pariétale et vectoriser la poussée.

10. Procédé de contrôle de recollement de jet sur le second galbe d'un divergent à galbe multiple d'une tuyère propulsive (4) d'un moteur d'engin spatial lorsque l'engin spatial est en phase de décollage ou d'atterrissage, ledit procédé comprenant les étapes suivantes :
• on équipe ledit moteur pour engin spatial d'une tuyère propulsive (4) telle que définie selon la revendication 7 ;
• À l'allumage du moteur on injecte radialement, dans ladite tuyère (4), du gaz (15) par l'intermédiaire dudit dispositif d'injection contrôlée (14) jusqu'à atteindre une altitude suffisante garantissant l'absence d'instabilité ;
• À très basse altitude, lors de la phase d'atterrissage, on injecte radialement, dans ladite tuyère (4), du gaz (15) par l'intermédiaire dudit dispositif d'injection contrôlée (14) jusqu'à l'extinction du moteur.

## Patentansprüche

1. Mehrfachkrümmung-Divergenzabschnitt für eine Treibdüse (4) eines Triebwerks für ein Luft- oder Raumfahrzeug, das durch eine chemische Reaktion angetrieben wird, wobei die Düse eine um eine Achse (41) rotationssymmetrische Düse ist, wobei das Triebwerk eine Reaktionskammer zur Erzeugung von Treibgasen aufweist, die dazu vorgesehen sind, aus der Düse (4) im Wesentlichen in einem Hauptstrom (42) ausgestoßen zu werden, wobei der Divergenzabschnitt ausgehend vom Düsenhals (3) aufweist:
- einen ersten Teil (11), der eine erste Wand (110) mit einer ersten Rotationsfläche um die Achse (41) der Düse aufweist, derart, dass die erste Wand (110) in einer axialen Ebene ein erstes gekrümmtes Profil aufweist, wobei das erste gekrümmte Profil geeignet ist, eine Strömung der Treibgase zu erzeugen, die für einen Betrieb in niedrigen Höhen geeignet ist,
- einen zweiten Teil (12) mit einer Gesamtlänge L, der im Bereich eines einen Krümmungsbruch definierenden Verbindungsbereiches (13) mit dem ersten Teil (11) verbunden ist, wobei der zweite Teil (12) eine zweite Wand (120) mit einer zweiten Rotationsfläche um die Achse (41) der Düse aufweist, derart, dass die zweite Wand (120) in einer axialen Ebene ein zweites gekrümmtes Profil aufweist, wobei das zweite gekrümmte Profil geeignet ist, eine Strömung der Treibgase zu erzeugen, die für einen Betrieb in großen Höhen geeignet ist, und
- eine Vorrichtung (14) zur gesteuerten Injektion mindestens eines zusätzlichen Gasstrahls (15) in den Hauptstrom (42) von Treibgasen, die von der Düse (4) ausgestoßen werden,
wobei der Divergenzabschnitt **dadurch gekennzeichnet ist, dass** die Vorrichtung (14) zur gesteuerten Injektion mit einer (141) oder mehreren Öffnungen oder einer Gruppe von Öffnungen (141, 142, 143, 144) verbunden ist, die achsensymmetrisch in der zweiten Wand (120) des Divergenzabschnitts ausgebildet sind, so dass die Injektion des zusätzlichen Gasstrahls (15) radial oder schräg gegen den Hauptstrom erfolgt, wobei die eine oder die mehreren Öffnungen (141, 142, 143, 144) in einem Abstand d von dem krümmungsbrechenden Verbindungsbereich angeordnet sind, der gleich oder weniger als 95% der Gesamtlänge L des zweiten Teils (12) und mehr als 1% der Gesamtlänge L des zweiten Teils (12) beträgt.

2. Divergenzabschnitt nach Anspruch 1, wobei die Vorrichtung (14) zur gesteuerten Injektion (14) eine einzelne Öffnung (141) aufweist, die aus einem Schlitz in Form eines Kranzes gebildet ist, der sich über den gesamten im Abstand d von dem krümmungsbrechenden Verbindungsbereich befindlichen Umfang der zweiten Wand (120) erstreckt, wobei die Größe der Öffnung (141) es ermöglicht, einen Durchsatz von bis zu 20% des Massendurchsatzes der Treibgase in der Düse mit einer Ausstoßgeschwindigkeit von Unterschall oder mehr zu erzielen.

3. Divergenzabschnitt nach Anspruch 1 oder 2, wobei die Vorrichtung (14) zur gesteuerten Injektion mindestens drei Öffnungen (142, 143, 144) mit identischer Form und Dimensionierungen aufweist, wobei die Öffnungen (142, 143, 144) entlang des im Abstand d von dem krümmungsbrechenden Verbindungsbereich befindlichen Umfangs der zweiten Wand (12) gleichmäßig beabstandet sind.

4. Divergenzabschnitt nach einem der Ansprüche 1 bis 3, wobei die Injektionsvorrichtung (14) ferner eine oder mehrere Zuführungskammern (145, 146, 147, 148) aufweist, die jeweils mit einer Öffnung (141, 142, 143, 144) der Injektionsvorrichtung (14) in Verbindung stehen und stromaufwärts von der Injektionsvorrichtung (14) angeordnet sind, um den zusätzlichen Gasstrahl (15) gleichmäßig in den Divergenzabschnitt zu injizieren.

5. Divergenzabschnitt nach einem der Ansprüche 1 bis 4, mit mehreren Vorrichtungen (14) zur gesteuerten Injektion, die sich in verschiedenen aufeinanderfolgenden Abständen d befinden, wodurch ein Wiederaufsetzen auf der zweiten Krümmung stromabwärts von der ersten Injektion verhindert werden kann.

6. Divergenzabschnitt nach einem der Ansprüche 1 bis 5, wobei der zusätzliche Gasstrahl (15), der durch die Injektionsvorrichtung oder die Injektionsvorrichtungen (14) injiziert wird, aus der Reaktionskammer (5) des Triebwerks oder aus Tanks für Oxidationsmittel (71) oder für Treibstoff (72) oder aus zusätzlichen Hilfstanks (73) stammt.

7. Treibdüse (4) eines Triebwerks für ein Luft- oder Raumfahrzeug, das durch eine chemische Reaktion angetrieben wird, wobei die Düse (4) aufweist:
- einen konvergierenden Teil (2), der die in der genannten Reaktionskammer (5) erzeugten Gase aufnimmt,
- einen Düsenhals (3), und
- einen Divergenzabschnitt, der mit dem Düsenhals (3) verbunden ist,
wobei die Düse (4) **dadurch gekennzeichnet ist, dass** der Divergenzabschnitt (1) wie gemäß eines der Ansprüche 1 bis 6 definiert ausgebildet ist.

8. Verfahren zur Steuerung des Übergangs des Strömungsregimes von Treibgasen in einem Mehrfachkrümmung-Divergenzabschnitt einer Treibdüse (4) eines Triebwerks für ein Luft- oder Raumfahrzeug, je nachdem, ob die Höhe des Luft- oder Raumfahrzeugs zunimmt oder abnimmt,
wobei das Verfahren für den Fall, dass die Höhe zunimmt, die folgenden Schritte umfasst:
• Ausstattung des Triebwerks mit einer Treibdüse (4) wie gemäß Anspruch 7 definiert;
• kurz vor Erreichen der natürlichen Übergangshöhe, Injektion von Gas (15) mittels der Vorrichtung (14) zur gesteuerten Injektion radial in die Düse (4); und
• Aufrechterhaltung der Injektion, bis die Höhe des Luft- oder Raumfahrzeugs eine als optimal zu bezeichnende Übergangshöhe erreicht,
wobei das Verfahren für den Fall, dass die Höhe abnimmt, die folgenden Schritte umfasst:
• Ausstattung des Triebwerks für Raumfahrzeuge mit einer Treibdüse (4) wie gemäß Anspruch 7 definiert;
• in der optimalen Übergangshöhe, Injektion von Gas (15) mittels der Vorrichtung (14) zur gesteuerten Injektion in die Düse (4), um die Ablösung des Hauptstroms (42) von der zweiten Wand (120) zu forcieren; und
• Aufrechterhaltung der Injektion, bis die Höhe des Luft- oder Raumfahrzeugs die natürliche Übergangshöhe unterschreitet.

9. Verfahren zur Schubvektorisierung in einem Mehrfachkrümmung-Divergenzabschnitt einer Treibdüse (4) eines Triebwerks für ein Luft- oder Raumfahrzeug, wobei das Verfahren die folgenden Schritte umfasst:
• Ausstattung des Triebwerks mit einer Treibdüse (4) wie gemäß der Ansprüche 3 und 7 zusammengenommen definiert;
• wenn eine Korrektur der Flugbahn des Luft- oder Raumfahrzeugs erforderlich ist, Injektion von Gas radial und asymmetrisch über die Öffnungen (142, 143, 144), wobei die Injektionsmengen von einer Öffnung zur anderen variiert werden, um die Strömung des Hauptstroms des Treibgases und den Parietaldruck asymmetrisch zu machen und den Schub zu vektorisieren.

10. Verfahren zur Steuerung des Strahlwiederaufsetzens auf die zweite Krümmung eines Mehrfachkrümmung-Divergenzabschnitts einer Treibdüse (4) eines Triebwerks für ein Raumfahrzeug, wenn sich das Raumfahrzeug in der Start- oder Landephase befindet, wobei das Verfahren die folgenden Schritte umfasst:
• Ausstattung des Triebwerks für Raumfahrzeuge mit einer Treibdüse (4) wie gemäß Anspruch 7 definiert;
• bei Inbetriebnahme des Triebwerks, Injektion von Gas (15) mittels der Vorrichtung (14) zur gesteuerten Injektion radial in die Düse (4), bis eine Höhe erreicht ist, die ausreicht, um das Nichtauftreten von Instabilitäten zu gewährleisten;
• in sehr niedriger Höhe, während der Landephase, Injektion von Gas (15) mittels der Vorrichtung (14) zur gesteuerten Injektion radial in die Düse (4), bis das Triebwerk ausgeschaltet wird.

## Claims

1. Divergent section with multiple contours for propulsion nozzle (4) of an engine for aircraft or spacecraft propelled by chemical reaction, said nozzle being a nozzle having rotational symmetry about an axis (41), said engine comprising a reaction chamber producing propulsion gases intended to be ejected outside the nozzle (4) essentially in a main stream (42), said divergent section comprising from the nozzle throat (3):
- a first portion (11) comprising a first wall (110) having a first surface of revolution about the axis of the nozzle (41), so that said first wall (110) has a first contoured profile in an axial plane, said first contoured profile being suitable for generating a flow of said propulsion gases adapted to operation at low altitudes,
- a second portion (12) having a total length L, which is connected to said first portion (11) at a connecting zone (13) defining a contour discontinuity, said second portion (12) comprising a second wall (120) having a second surface of revolution about the axis of the nozzle (41), so that said second wall (120) has a second contoured profile in an axial plane, said second contoured profile being suitable for generating a flow of said propulsion gases adapted to operation at high altitudes, and
- a device for controlled injection (14) of at least one additional jet of gas (15) into the main stream (42) of propulsion gases exhausted by the nozzle (4),
said divergent section being **characterized in that** said controlled injection device (14) is connected to one (141) or more orifices or group of orifices (141, 142, 143, 144) produced axisymmetrically in said second wall (120) of said divergent section, so that the injection of the additional jet of gas (15) is carried out radially or inclined counterflow to the main stream, said orifice or orifices (141, 142, 143, 144) being arranged therein at a distance d from said connecting zone having a contour discontinuity which is equal to or less than 95% of the total length L of said second portion (12) and greater than 1% of the total length L of said second portion (12).

2. Divergent section according to claim 1, wherein said controlled injection device (14) comprises a single orifice (141) consisting of a slot having the form of a ring extending over the entire circumference of the second wall (120) situated at the distance d from said connecting zone having a contour discontinuity, the width of the orifice (141) making it possible to obtain a flow rate reaching up to 20% of the mass flow rate of the propulsion gases in the nozzle with an ejection speed that is subsonic or above.

3. Divergent section according to claims 1 or 2, in which said controlled injection device (14) comprises at least three orifices (142, 143, 144) having identical shape and dimensions, said orifices (142, 143, 144) being regularly spaced along the circumference of the second wall (12) which is situated at the distance d from said connecting zone having a contour discontinuity.

4. Divergent section according to any one of claims 1 to 3, according to which said injection device (14) also comprises one or more feeding chambers (145, 146, 147, 148) each communicating with an orifice (141, 142, 143, 144) of said injection device (14) and arranged upstream of said injection device (14) to homogeneously inject the additional jet of gas (15) into said divergent section.

5. Divergent section according to any one of claims 1 to 4, comprising several controlled injection devices (14) situated at successive different distances d making it possible to prevent the reattachment on the second contour downstream of the primary injection.

6. Divergent section according to any one of claims 1 to 5, according to which the additional jet of gas (15) injected by said injection device or devices (14) originates from said reaction chamber (5) of the engine, or from oxidizer (71) or fuel (72) tanks, or attached auxiliary tanks (73).

7. Propulsion nozzle (4) of an engine for aircraft or spacecraft propelled by chemical reaction, said nozzle (4) comprising:
- a convergent portion (2) receiving the gases produced in said reaction chamber (5),
- a nozzle throat (3), and
- a divergent section connected to the nozzle throat (3),
said nozzle (4) being **characterized in that** the divergent section is as defined according to any one of claims 1 to 6.

8. Method for controlling the transition of the propulsion gas flow regime in a divergent section having multiple contours of a propulsion nozzle (4) of an engine for an aircraft or spacecraft as a function of whether the altitude of the aircraft or of the spacecraft increases or decreases,
said method comprising, in the case in which the altitude increases, the following steps:
- said engine is equipped with a propulsion nozzle (4) as defined according to claim 7;
- just before the natural transition altitude is reached, gas (15) is injected radially into said nozzle (4) via said controlled injection device (14); and
- the injection is maintained until the altitude of the aircraft or of the spacecraft reaches a said transition altitude called optimal transition altitude;
said method comprising, in the case in which the altitude decreases, the following steps:
- said engine for a spacecraft is equipped with a propulsion nozzle (4) as defined according to claim 7;
- at the optimal transition altitude, gas (15) is injected into said nozzle (4) via said controlled injection device (14) so as to force the detachment of the main stream (42) from the second wall (120); and
- the injection is maintained until the altitude of the aircraft or of the spacecraft passes below said natural transition altitude.

9. Method for thrust vectorization in a divergent section having multiple contours of a propulsion nozzle (4) of an engine for an aircraft or spacecraft, said method comprising the following steps:
- said engine is equipped with a propulsion nozzle (4) as defined according to claims 3 and 7 taken together;
- when it is necessary to correct the trajectory of said aircraft or spacecraft, gas is injected radially and asymmetrically through said orifices (142, 143, 144), while varying the injection flow rates from one orifice to another, so as to make the flow of the main stream of propulsion gas and the peripheral pressure asymmetrical and vectorize the thrust.

10. Method for controlling the reattachment of the jet on the second contour of a divergent section having multiple contours of a propulsion nozzle (4) of an engine of a spacecraft when the spacecraft is in the take-off or landing phase, said method comprising the following steps:
- said engine for a spacecraft is equipped with a propulsion nozzle (4) as defined according to claim 7;
- when the engine is switched on, gas (15) is injected radially into said nozzle (4) via said controlled injection device (14) until a sufficient altitude is reached guaranteeing the absence of instability;
- at very low altitude, during the landing phase, gas (15) is injected radially into said nozzle (4) via said controlled injection device (14) until the engine is switched off.
